# EUROPÄISCHE PATENTANMELDUNG

(11) **EP 0 588 199 A1**
(43) Veröffentlichungstag der Anmeldung: **23.03.1994**
(21) Anmeldenummer: 93114271.5
(22) Anmeldetag: 06.09.1993
(51) Int. Cl.: H02M 7/5387, H02M 5/45

(54) **Multiprozessorsystem zur Steuerung und Regelung eines Umrichters**

(30) Priorität: 18.09.1992 DE 4231347
(71) Anmelder: SIEMENS AKTIENGESELLSCHAFT, D-80333 München (DE)
(72) Erfinder: Kroworsch, Hans-Peter, Dipl.-Ing., D-91336 Heroldsbach (DE); Eckart,Dieter,Dr., D-91074 Herzogenaurach (DE); Fleisch, Karl, Dipl.-Ing.(FH), D-91054 Erlangen (DE)

(57) **Zusammenfassung**

Die Erfindung bezieht sich auf ein Steuer- und Regelungssystem eines Umrichters, der aus einem gesteuerten Gleichrichter, einem Zwischenkreis und einem Wechselrichter besteht. Erfindungsgemäß besteht dieses Steuer- und Regelungssystem aus drei unabhängigen Prozessoren (2,4,6), die untereinander jeweils mittels einer Datenübergabeeinrichtung (10,12) verbunden sind, und einem A/D-Wandlersystem (8), das mit einem der drei Prozessoren (2,4,6) verbunden ist. Somit erhält man ein kompaktes Steuer- und Regelungssystem für einen Umrichter, dessen Aufwand und Fertigungskosten gering sind.

## Beschreibung

Die Erfindung bezieht sich auf ein Steuer- und Regelungssystem eines Umrichters, bestehend aus einem gesteuerten Gleichrichter, einem Zwischenkreis und einem Wechselrichter.

Im Handel ist ein Multi-Mikrocomputersystem für schnelles Regeln und Rechnen, Steuern und Überwachen und Melden und Protokollieren in der Antriebs- und Energietechnik, genannt SIMADYN D, bekannt (Katalog DA99.1989, Bestell-Nr. E86010-K4099-A111-A2). Dieses Regelungssystem SIMADYN D ist frei projektierbar, voll digital und besonders geeignet für alle drehzahlveränderbaren stromrichtergespeisten Gleichstrom- und Drehstromantriebe, andere Anwendungen mit Stromrichtern (Hochspannungs-Gleichstrom-Übertragung, Blindstrom-Kompensationsanlagen) und Anwendungen ohne Stromrichter in der Energietechnik (schnelle Turbinenregelung).

Das Regelgerät SIMADYN D besteht aus einem Baugruppenträger mit eingeschobenem Netzgerät und nach Bedarf eingesteckten Baugruppen (Modulen). Die Frontplatten der Module bestehen aus Metall und bilden zusammen mit dem Baugruppenträger eine allseitig geschirmte störsichere Einheit. Alle Anzeigeelemente und Steckverbindungen zur Peripherie befinden sich an der Frontseite.

Der Datenaustausch zwischen den Prozessormodulen erfolgt über die beiden Systembusse (einen unterteilten Lokalbus und einen durchgehenden Kommunikationsbus) an der Rückseite des Baugruppenträger. Je nach Regel-, Rechen- und Steueraufgabe sind unterschiedliche Module in den Baugruppenträger zu stecken.

Anlagenseitige Kabel und Leitungen werden an den Schraubklemmen von Interfacemodulen angeschlossen. Mit den Interfacemodulen werden die Signale nach Bedarf angepaßt, galvanisch getrennt und entstört. Die Interfacemodule sind über steckbare Flachleitungen mit den Hardwaremodulen verbunden und werden außerhalb des Baugruppenträgers im Reglerschrank auf Tragschienen aufgeschnappt.

Bei SIMADYN D werden je nach Umfang und Komplexität der Aufgabe bis zu acht Prozessormodule in einen Baugruppenträger eingesetzt. Jedes Prozessormodul verfügt über eigene Programm- und Datenspeicher und bearbeitet die ihm zugewiesene Teilaufgabe weitgehend unabhängig von den anderen Prozessormodulen. Das für jeden Prozessor spezifisch projektierte Anwenderprogramm befindet sich zusammen mit der System-Software in einem von vorn steckbaren Speichersubmodul.

Aus der Zeitschrift "IEEE Transactions on Power Electronics", Vol. 5, No. 4, Oktober 1990, Seiten 413-423, ist ein Multiprozessorsystem zur Steuerung und Regelung eines permanenterregten Synchronantriebs bekannt. Dieses Multiprozessorsystem besteht aus zwei Mikroprozessoren von denen einer einen Drehzahl- und Lagesteueralgorithmus und der andere einen Stromregelalgorithmus bearbeitet. Dieser zweite Mikroprozessor generiert außerdem Zündsignale für den Wechselrichter. Die beiden Mikroprozessoren sind mit einem gemeinsamen VME-Bus verbunden, der außerdem noch mit einer parallelen Ein-/Ausgabe-Einheit, einem A/D-Wandler und einem D/A-Wandler verbunden ist. Um Daten zwischen den beiden Mikroprozessoren zu transportieren, ist ein gemeinsamer Speicher in einem der beiden Mikroprozessoren vorgesehen. Jeder Prozessor ist noch mit einem Co-Prozessor ausgerüstet. Nachteilig bei diesem Multiprozessorsystem kann sich der VME-Bus im Bezug auf Dynamik auswirken, da jeweils nur eine Baugruppe mit dem VME-Bus Daten austauschen kann.

Außerdem wird bei der Verwendung eines Bussystems eine Bussteuerung benötigt, wodurch sich der Aufwand erhöht. Ein derartiges Multiprozessorsystem, das aus mehreren Baugruppen besteht, benötigt ebenfalls einen Baugruppenträger zur Aufnahme der Baugruppen, wodurch sich die Fertigungskosten erhöhen.

Aus dem Siemens Katalog DA66.2-1991/92 mit dem Titel "Spannungszwischenkreis-Umrichter SIMOVERT P für drehzahlveränderbare Drehstromantriebe", Bestell-Nr. E20002-K4066-A121-A1 ist eine Steuer- und Regelbaugruppe für einen Spannungszwischenkreis-Umrichter bekannt. Dieser Umrichter besteht aus einem umgesteuerten Gleichrichter, einem Spannungszwischenkreis mit konstanter Zwischenkreisspannung und einem Pulswechselrichter. Die Steuer- und Regelbaugruppe besteht aus der Baugruppe "Regelung und Einschaltsteuerung" und der Baugruppe "Wechselrichtersteuersatz". Dabei ist die erstgenannte Baugruppe als Grundbaugruppe ausgeführt, auf die die zweitgenannte Baugruppe aufgesteckt ist. Beim Einsatz der Option "Serielle Schnittstelle" wird die Schnittstellenbaugruppe ebenfalls auf die Grundbaugruppe aufgesteckt. Diese Grundbaugruppe ist zusammen mit einer Elektronik-Stromversorgungsbaugruppe in einem Baugruppenträger untergebracht, wobei im Baugruppenträger noch für weitere fünf Baugruppen Platz vorhanden ist. Soll dieser Spannungszwischenkreis-Umrichter für einen Vierquadrantenbetrieb verwendet werden, so wird der umgesteuerte Gleichrichter durch einen gegenparallelen vollgesteuerten Netzstromrichter ersetzt und im Baugruppenträger wird die Baugruppe "Netzsteuersatz und Zwischenkreisregelung" gesteckt. Die Steuer- und Regelung dieser SIMOVERT P-Umrichter ist voll digitalisiert. Alle Funktionen einschließlich Steuersatz, Bedienungskomfort und umfangreiche Schutzfunktionen werden über zwei 16-Bit-Mikroprozessoren abgearbeitet. Auch bei diesem Steuer- und Regelungssystem sind einzelne Funktionen auf verschiedenen Platinen verteilt, wodurch der Aufwand und die Fertigung hoch sind.

Der Erfindung liegt nun die Aufgabe zugrunde, ein Steuer- und Regelungssystem für einen Umrichter der eingangs genannten Art anzugeben, das die aufgezeigten Nachteile nicht mehr hat.

Diese Erfindung wird erfindungsgemäß dadurch gelöst, daß das Steuer- und Regelungssystem aus drei unabhängigen Prozessoren, die untereinander jeweils mittels einer Datenübergabeeinrichtung verbunden sind, und einem A/D-Wandlersystem besteht, das mit einem der drei Prozessoren verbunden ist.

Dieses Steuer- und Regelungssystem kann durch diese wenigen Baugelement auf eine einzigen Platine untergebracht werden. Außerdem wird durch die unabhängigen Prozessoren kein Bussystem für den Datentransfer benötigt, wodurch nicht nur das Bussystem als solches, sondern auch die zugehörige Bussteuerung entfallt. Dadurch entfällt die Aufteilung einzelner Funktionen auf verschiedene Platienen. Durch die Verwendung von drei unabhängigen Prozessoren, wobei ein Prozessor, auch GR-Prozessor genannt, die Regelung des Zwischenkreises (Spannung, Strom, Batterieladung,...), und die Bildung der Zündsignale für die Stromrichterventile zweier sechspulsiger Stromrichter, ein anderer Prozessor, auch WR-Prozessor genannt, die Regelung des Wechselrichters (Spannung, Strom, Kurvenform, Drehzahl, Drehmoment,...), die Bildung der pulsweitenmodulierten Zündsignale und die Synchronisation auf ein bestimmtes Netz und ein dritter Prozessor, auch Manager-Prozessor genannt, die Steuerung der Regelungsprozessoren, die Überwachung des Systems und die Kommunikation mit der Außenwelt übernehmen. Durch diese Funktionsverdichtung reduziert sich der Aufwand und die Fertigungskosten erheblich.

Bei einer besonders vorteilhaften Ausführungsform des Steuer- und Regelungssystems sind der Manager-Prozessor jeweils mit einem Dual-Port-RAM mit dem GR-Prozessor und dem WR-Prozessor und der WR-Prozessor mittels eines FIFO mit dem GR-Prozessor verknüpft, wobei als Prozessoren jeweils ein 16-Bit-Single-Chip-Microcontroller vorgesehen sind. Bei der Funktionsverdichtung können der GR- und der WR-Prozessor außerdem jeweils die Funktion eines Impulsverteilers übernehmen, wodurch zwei Bauelemente mit zugehöriger Verdrahtung eingespart werden können.

Bei einer weiteren vorteilhaften Ausgestaltung des Steuer- und Regelungssystems ist der WR-Prozessor nicht über ein FIFO und nicht über ein Dual-Port-RAM mit dem GR-Prozessor verkünpft. Dadurch wird wieder ein Bauelement mit zugehöriger Verdrahtung eingespart, wodurch sich der Aufwand und die Fertigungskosten senken. Der Datentransfer vom WR-Prozessor zum GR-Prozessor findet über den Manager-Prozessor statt.

Bei einer weiteren vorteilhaften Ausgestaltung des Steuer- und Regelungssystems ist der Manager-Prozessor jeweils direkt mit dem GR- und dem WR-Prozessor verkünpft. Um Daten zwischen dem Manager-Prozessor und dem WR- bzw. GR-Prozessor zur transportieren ist ein interner Speicher im WR- und GR-Prozessor jeweils als gemeinsamer Speicher vorgesehen. In diesem internen Speicher des WR- bzw. des GR-Prozessors können auch die Daten des A/D-Wandlersystems abgelegt werden. Durch diese Maßnahme können zwei weitere Bauelemente mit zugehöriger Verdrahtung eingespart werden, wodurch der Aufwand und die Fertigungskosten weiter gesenkt werden können.

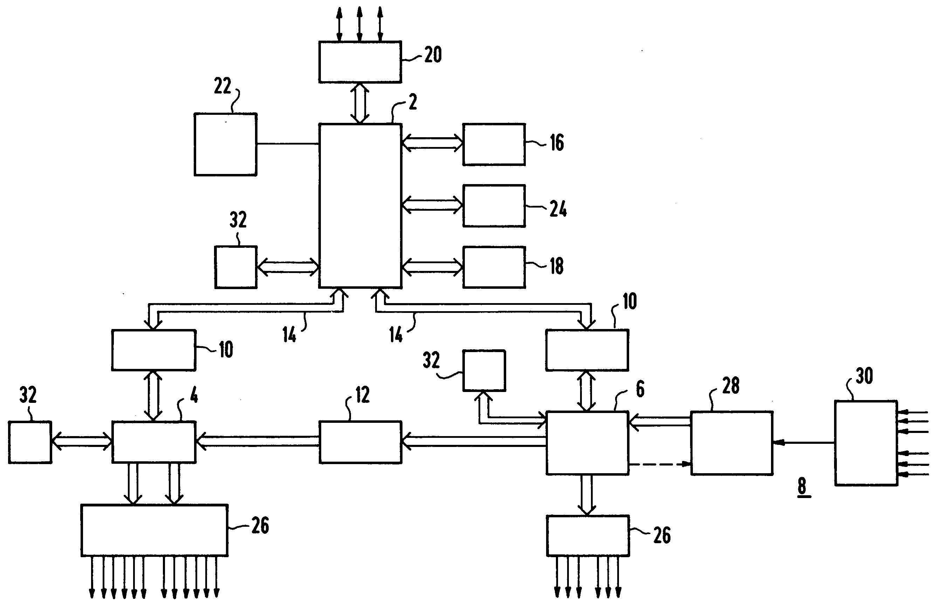

Zur weiteren Erläuterung des erfindungsgemäßen Steuer- und Regelungssystems für einen Umrichter wird auf die Zeichnung Bezug genommen, in der eine Ausführungsform schematisch veranschaulicht wird.

Die Figur zeigt schematisch ein Blockschaltbild des erfindungsgemäßen Steuer- und Regelungssystems für einen Umrichter, der aus Übersichtlichkeitsgründen nicht näher dargestellt ist. Bei diesem Umrichter handelt es sich um einen Umrichter, der aus einem gesteuerten Gleichrichter bzw. einem gegenparallelen vollgesteuerten Netzstromrichter, einem Zwischenkreis und einem Wechselrichter bzw. Laststromrichter besteht. Die beiden Stromrichter benötigen jeweis eine Steuer- und Regelanordnung.

Das erfindungsgemäße Steuer- und Regelungssystem für einen derartigen Umrichter besteht aus drei unabhängigen Prozessoren 2,4 und 6 und einem A/D-Wandlersystem 8. Die Prozessoren 2,4 und 6 sind untereinander mittels Datenübergabeeinrichtungen 10 und 12 verbunden. Die Datenübergabeeinrichtung 10 ist ein spezieller Schreib-Lese-Speicher, der es zwei unabhängigen Prozessoren 2 und 4 bzw. 2 und 6 ermöglicht, auf gemeinsame Daten zuzugreifen. Das ermöglicht einen Datenaustausch zwischen den beiden Prozessoren 2 und 4 bzw. 2 und 6. Dazu hat die Datenübergabeeinrichtung 10, auch Zweitorspeicher genannt, zwei getrennte Sätze von Adress-, Daten- und Steuerleitungen, von denen hier wegen der Übersichtlichkeit nur beispielhaft die Datenleitungen 14 dargestellt sind. Als Zweitorspeicher ist jeweils ein Dual-Port-RAM vorgesehen.

Ein erster Prozessor 2, der auch Manager-Prozessor genannt wird, ist einerseits mittels eines Dual-Port-RAM 10 mit dem zweiten Prozessor 4, auch GR-Prozessor genannt, und andererseits mittels eines Dual-Port-RAM 10 mit dem dritten Prozessor 6, auch WR-Prozessor genannt, verknüpft.

Die Datenübergabeeinrichtung 12 ist eine besondere Form eines Schieberegisters, wobei die Daten in derselben Reihenfolge am Ausgang erscheinen, wie sie eingegeben wurden: Das zuerst gelesene Wort (FIRST IN) wird auch wieder zuerst ausgelesen (FIRST OUT). Deshalb ist dieses besondere Schieberegister unter dem Namen FIFO bekannt. Da bei dem FIFO 12 im Unterschied zu einem Schieberegister die Datenübergabe völlig asynchron erfolgt, d.h. der Auslesetakt ist unabhängig vom Einlesetakt, benutzt man FIFOs zur Kopplung asynchroner Systeme.

Der Manager-Prozessor 2 ist außerdem mit einem Schreib-Lese-Speicher 16, einem Diagnosespeicher 18, einer Schnittstelle 20, einer Schalthandlung 22 und beispielsweise einer Uhr 24 verknüpft. Der GR-Prozessor 4 und der WR-Prozessor 6 sind jeweils mit einem Impulsverteiler 26 ausgangsseitig verbunden.

Das A/D-Wandlersystem 8, das aus einem A/D-Wandler 28 mit vorgeschaltetem Multiplexer 30 besteht, ist im dargestellten Ausführungsbeispiel mit dem WR-Prozessor verbunden. Dieses A/D-Wandlersystem 8, an dessen Eingänge mehrere analoge Istwerte anstehen, kann auch mit dem GR-Prozessor 4 verknüpft werden. Dieses A/D-Wandlersystem 8 kann frei laufen oder aber vom WR-, GR- oder Manager-Prozessor 6,4 oder 2 getriggert werden. Im Ausführungsbeispiel wird das A/D-Wandlersystem 8 vom WR-Prozessor 6 getriggert, erkennbar durch einen unterbrochenen Pfeil.

Damit die drei unabhängigen Prozessoren 2,4 und 6 unterschiedliche Aufgaben erfüllen können, ist jedem Prozessor 2,4 und 6 jeweils ein Festwertspeicher 32, insbesondere ein löschbarer Festwertspeicher, auch EPROM (Erasable Programmable Read Only Memory) genannt, zugeordnet, in denen die entsprechenden Programme abgelegt sind.

Der Manager-Prozessor 2 hat zur Aufgabe, die Regelungsprozessoren 4 und 6 zu steuern, das Steuer- und Regelungssystem zu überwachen und mit der Außenwelt zu kommunizieren, weshalb dieser Prozessor 2 mit Peripherie-Bauelementen 16-24 ausgestattet ist.

Der GR-Prozessor 4 hat die Aufgabe, den Zwischenkreis zu regeln, (Spannung, Strom, Batterieladung,...) und die Zündimpulse für die Stromrichterventile für die beiden sechspulsigen Stromrichter zu bilden. Die benötigten Istwerte erhält der GR-Prozessor 4 mittels des FIFO 12 vom WR-Prozessor 6 und die entsprechenden Sollwerte mittels des Dual-Port-RAM 10 vom Manager-Prozessor 2. In einer vorteilhaften Ausführungsform ist der ausgangsseitige Impulsverteiler 26 funktionaler Bestandteil des GR-Prozessors 4.

Der WR-Prozessor 6 hat die Aufgabe, den Wechselrichter zu regeln (Spannung, Strom, Kurvenform, Drehzahl, Drehmoment,...), die pulsweitenmodulierten Signale zu generieren und die Synchronisation auf ein vorbestimmtes Netz vorzunehmen. Auch dieser WR-Prozessor 6 erhält seine Sollwerte mittels des Dual-Port-RAM 10 vom Manager-Prozessor 2 und seine Istwerte von A/D-Wandlersystem 8. Auch hier ist der ausgangsseitige Impulsverteiler 26 in einer vorteilhaften Ausführungsform funktionaler Bestandteil des WR-Prozessors 6.

Als Prozessoren 2,4 und 6 ist jeweils ein 16-Bit-Single-Chip-Microcontroller, insbesondere der Controller SAB 80C166 der Fa. Siemens, vorgesehen. Dieser 16-Bit-Single-Chip-Micorcontroller hat neben einer Central Processing Unit (CPU) eine umfangreiche Peripherie, die teilweise zur Regelung des Netz- bzw. des Gleichstromrichters des eingangs genannten Umrichters gebraucht werden. Die benötigten Peripherien sind folgende:
- PEC Logik:: Transfer der A/D gewandelten Werte vom A/D-Wandler 28 in den Speicher des WR-Prozessors 6.
- CAPCOM-Logik:: Generierung der Zündimpulse und der pulsweitenmodulierten Signale
- USART:: Signalverkehr, Kommunikation mit Außenwelt
- Int.RAM:: Speicher
- div. Timer:: Zeitbasen, Abtastzeiten
- Ports:: Ein-/Ausgabekanäle.

Durch die Verwendung dieser drei unabhängigen Prozessoren 2,4 und 6, die über Dual-Port-RAM 10 und/oder FIFO 12 gekoppelt sind, erhält man ein kompaktes Steuer- und Regelungssystem, das auf einer Platine Platz findet und dessen Aufwand und Fertigungskosten sich erheblich reduziert haben.

## Patentansprüche

1. Steuer- und Regelungssystem eines Umrichters, der aus einem gesteuerten Gleichrichter, einem Zwischenkreis und einem Wechselrichter besteht, bestehend aus drei unabhänigen Prozessoren (2,4,6), die untereinander jeweils mittels einer Datenübergabeeinrichtung (10,12) verbunden sind, und einem A/D-Wandlersystem (8), das mit einem der drei Prozessoren (2,4,6) verbunden ist.

2. Steuer- und Regelungssystem nach Anspruch 1, wobei einer der drei unabhängigen Prozessoren (2,4,6) mit einem Diagnosespeicher (18) und/oder mit einem Schreib-Lese-Speicher (16) und/oder mit einer Schnittstelle (20) und/oder mit einer Schalthandlung (22) versehen ist, wobei das A/D-Wandlersystem (8) mit einem der beiden anderen unabhängigen Prozessoren (4,6) verknüpft ist.

3. Steuer- und Regelungssystem nach Anspruch 2, wobei die beiden anderen unabhängigen Prozessoren (4,6) jeweils ausgangsseitig mit einem Impulsverteiler (26) versehen sind.

4. Steuer- und Regelungssystem nach Anspruch 1, wobei jedem Prozessor (2,4,6) ein löschbarer Festwertspeicher (32) zugeordnet ist.

5. Steuer- und Regelungssystem nach Anspruch 1, wobei jeweils als Prozessor (2,4,6) ein Single-Chip-Microcontroller vorgesehen ist.

6. Steuer- und Regelungssystem nach Anspruch 1, wobei als Datenübergabeeinrichtung (10) ein Zweitorspeicher vorgesehen ist.

7. Steuer- und Regelungssystem nach Anspruch 1, wobei als Datenübergabeeinrichtung (12) ein Schieberegister vorgesehen ist.

8. Steuer- und Regelungssystem nach Anspruch 1, wobei als A/D-Wandlersystem (8) ein A/D-Wandler (28) mit vorgeschaltetem Multiplexer (30) vorgesehen ist.

9. Steuer- und Regelungssystem nach Anspruch 6, wobei als Zweitorspeicher ein Dual-Port-RAM vorgesehen ist.

10. Steuer- und Regelungssystem nach Anspruch 7, wobei als Schieberegister ein FIFO vorgesehen ist.
